# FASCICULE DE BREVET EUROPEEN

(11) **EP 3 709 274 B1**
(45) Date de publication et mention de la délivrance du brevet: **08.11.2023**
(21) Numéro de dépôt: 20163212.2
(22) Date de dépôt: 15.03.2020
(51) Int. Cl.: G07C 13/00

(54) **SYSTÈME DE VOTE ÉLECTRONIQUE SUR INTERNET**
ELEKTRONISCHES WAHLSYSTEM ÜBER INTERNET
SYSTEM FOR ELECTRONIC VOTING ON THE INTERNET

(30) Priorité: 15.03.2019 BE 201905160
(43) Date de publication de la demande: 16.09.2020
(73) Titulaire: Dutordoir, Christophe, 1180 Bruxelles (BE)
(72) Inventeur: Dutordoir, Christophe, 1180 Bruxelles (BE)
(74) Mandataire: Kirkpatrick

(56) Documents cités:
- WO-A1-2008/065349
- FR-A1- 2 912 520
- US-A1- 2010 025 466

## Description

Le vote sur internet intéresse les divers intervenants des scrutins électoraux sur la planète entière, et cela depuis de nombreuses années.

Le vote par internet comporte en effet de nombreux avantages :
∘ Liberté du lieu et du moment du vote (pendant la durée de l'élection)
∘ Pas de nécessité de déplacement
∘ Pas de souci d'inconfort, ou de sécurité
∘ Pas de solution à trouver pour compenser l'absence de l'électeur (garde d'enfant, de personnes âgées, occupation professionnelle, ...)

- Pour l'électeur :Liberté du lieu et du moment du vote (pendant la durée de l'élection). Pas de nécessité de déplacement. Pas de souci d'inconfort, ou de sécurité. Pas de solution à trouver pour compenser l'absence de l'électeur (garde d'enfant, de personnes âgées, occupation professionnelle, ...)...
   ∘ Pas - ou moins - de mise en place de bureaux de vote
   ∘ Pas - ou moins - de ressources à trouver : présidents, assesseurs, forces de l'ordre, huissiers, ...
   ∘ Elimination ou diminution de la charge de travail, de l'aspect fastidieux du dépouillement
   ∘ Elimination du risque d'erreur, d'invalidité ou de fraude
   ∘ Facilité de la transmission des résultats du vote, et de leur publication
   ∘ Diminution des coûts liés à l'organisation
- Pour les organisateurs :Pas - ou moins - de mise en place de bureaux de vote. Pas - ou moins - de ressources à trouver : présidents, assesseurs, forces de l'ordre, huissiers, ...Elimination ou diminution de la charge de travail, de l'aspect fastidieux du dépouillementElimination du risque d'erreur, d'invalidité ou de fraude. Facilité de la transmission des résultats du vote, et de leur publication. Diminution des coûts liés à l'organisation...

Malheureusement, les expériences mises en place dans de nombreux pays jusqu'à présent se sont soldées par des échecs. Souvent pour des raisons techniques, mais plus encore à cause d'un manque de confiance en ces systèmes de vote électronique que beaucoup perçoivent comme une insondable « boite noire », exposée à toutes les manipulations. De nombreux candidats, partis politiques et électeurs ne se sont pas cachés du sentiment de défiance que leur inspire ces systèmes.

La présente invention propose un système de serveur informatique connecté à internet qui concilie à la fois les avantages évidents décrits ci-dessus, avec une transparence complète, une capacité à vérifier l'enregistrement des votes, tout en ne compromettant pas l'indispensable confidentialité attachée au vote. On comprendra que système peut s'appliquer à des situations autres que celles des scrutins électoraux.

### ART ANTERIEUR

Le brevet WO2008/065349 A1 décrit un système capable de fournir une méthode de vote anonyme dans un réseau distribué. Mais aussi, le brevet US2010025466 A1 décrit un procédé et un système du type susmentionné dans lequel une plate-forme informatique de confiance est utilisée pour fournir un vote électronique sécurisé, et pour permettre aux membres du grand public de vérifier certains aspects des résultats des élections.

On décrit ci-dessous trois exemples de système de vote « reconnus », et les améliorations visées par le système selon l'invention.

### V2 Secure^{®}

Election-Europe ( https://www.election-europe.com ) se présente comme le leader européen de l'organisation des élections professionnelles et publiques.

Cette société utilise un système de vote en ligne breveté, V2 Secure^{®}, décrit comme le premier système mondial de « vote vérifiable sécurisé ».

En pratique, ce système donne la possibilité à l'électeur de voir un « reflet éphémère » (selon leurs propres termes) de son vote, alors que celui-ci est en attente de confirmation dans l'urne électronique. Un fois ce vote validé, l'utilisateur ne pourra plus retrouver son bulletin de vote. Il va de soi que ce système ouvre la porte à de nombreuses manipulations et n'est en tout cas pas à même de réinstaurer la confiance de l'électeur dans le vote électronique par internet.

A la différence de V2 Secure^{®}, le système de l'invention permet de vérifier son bulletin de vote à n'importe quel moment, et ce directement à la source du choix de l'électeur, comme par exemple parmi les bulletins distribués aux observateurs.

### Scytl

Scytl se définit comme le « leader mondial du vote électronique ». Cette société est, par exemple, la sous-traitante du moment de l'ECES (European Center for Electoral Support). La méthodologie de Scytl comporte 3 désavantages importants par rapport à notre système de vote :
- 1. L'usage impératif de certificats numériques, encryptés par un système de clefs : complexes d'utilisation, les certificats numériques n'apportent pas un d'avantage réel en termes de sécurisation. Tous les systèmes de gestion bancaire par internet ont abandonné cette voie
- 2. Le système envoie à l'électeur un lien vers son bulletin de vote, preuve que ce lien (entre électeur et bulletin) existe bien !
- 3. Seul le « mélange des bulletins » en fin de parcours, ne permet plus le lien entre l'électeur et son bulletin. Ni aucune forme de vérification, donc.

### Belenios

Belenios est un système de vote sur internet développé par l'INRIA (Institut National de Recherche en Sciences Numériques), en partenariat avec le CNRS.

Dans ce système, le vote est encrypté à l'aide d'une clef publique. Un numéro de suivi (tracking number) est ensuite envoyé à l'électeur, lui permettant de vérifier que son vote se trouve bien dans l'urne électronique. En pratique, cela signifie que le numéro de suivi est stocké par le système, et donc, que la relation peut être établie entre un électeur et son vote !

Le système de la présente invention, en revanche, est :
- sécurisé par SSL (comme les banques en ligne)
- ne nécessite pas de certificat numérique, ni de clef publiques ou privées
- ne stocke jamais le lien entre la fiche de l'électeur et son bulletin de vote
- permet la distribution des bulletins de vote entièrement dépersonnalisés au plus grand nombre (observateurs)
- permet la vérification par l'électeur de son propre bulletin de vote, d'où il veut, quand il veut, en s'alimentant à la source de son choix

### EXPOSE DE L'INVENTION

L'invention concerne un système de vote via un système de serveur informatique connecté à internet selon la revendication 1.

D'autres aspects de l'inventions sont décrits dans les revendications dépendantes.

à Le processus de scrutin proposé débute de manière connue et classique, par une convocation à participer à l'élection sur base d'une liste électorale (base de données des électeurs).

Il est entendu que la partie convocation - inscription décrite ici ne fait pas partie de la présente invention. Elle décrit un cas de figure possible, réunissant des critères de sécurité optimale, mais peut bien sûr être modifiée en fonction des desiderata ou des nécessités particulières de certains scrutins (dispositions légales, ou simplification, par exemple).

La présente invention concerne en effet le processus de scrutin au moment du vote proprement dit, ainsi qu'après le vote (vérification - publication des résultats - anti-coercition) .

A titre d'exemple les étapes suivantes sont réalisées de manière connue ou non inventive, en début de procédure.

### 1. Convocation

Une convocation papier est envoyée à l'électeur, contenant son nom d'utilisateur, son code PIN, et le bureau dans lequel il est appelé à voter.

### ===== Exemple ================================

Nom d'utilisateur :CH.DUTO.9267PIN code :476325Bureau de vote :Ixelles 23

### 2. Inscription

Muni de ces informations, ainsi que de sa carte d'identité, l'électeur se rend ensuite sur le site web du vote, également renseigné sur la convocation, afin de s'y inscrire. Il se connecte sur le site en entrant les paramètres suivants :

### ===== Exemple ================================

Nom d'utilisateur :CH.DUTO.9267PIN code :476325Numéro de Reg. Nat. :680814.478.96

### Envoyer

Il est demandé ensuite d'entrer l'adresse e-mail ou le numéro du téléphone portable qu'il désire utiliser pour le vote :

### ===== Exemple ================================

Adresse e-mail :ch.duto@gmail.comConfirmation :ch.duto@gmail.com- Ou -Numéro de portable :+32 475 52 56 56Confirmation :+32 475 52 56 56

### Envoyer

Ce qui a pour effet de lui envoyer, dans sa boite e-mail, ou sur son téléphone portable, son mot de passe de vote :

### ===== Exemple ================================

Voici le mot de passe à utiliser pour les élections xxx du jj/mm/aaaa :5Gt7e9K3Fp46

### Vote

Durant la période du vote, l'électeur est appelé à se rendre sur le site web, muni de sa convocation, de sa carte d'identité, ainsi que de l'e-mail ou du message (sms) contenant son mot de passe de vote :

### ===== Exemple ================================

Nom d'utilisateur :CH.DUTO.9267Numéro de Reg. Nat. :680814.478.96Mot de passe de vote :5Gt7e9K3Fp46

### Envoyer

Les différentes listes ou propositions de vote lui sont présentées sur l'écran. L'électeur les remplit, exprimant ainsi son choix électoral.

### PARTICULARITES DE L'INVENTION :

Avant de soumettre son vote, le système demande à l'électeur d'entrer un mot de passe de vérification, connu de lui seul. Ce mot de passe ne sera pas enregistré dans le système de vote, ni dans la base de données des électeurs.

### ===== Exemple ================================

Récapitulatif de votre choix :
- Liste X
- Candidat A
- Candidat B
- Candidat C

Veuillez entrer votre mot de passe de vérification :Louxor76.78(ce mot de passe ne sera pas enregistré par le système)Modifier le vote Enregistrer le vote

Le mot de passe est entré, et validé. Le vote est soumis au système, ce qui aura deux conséquences :
- D'une part, dans la base de données, le statut de l'électeur passe à « a voté », sans que l'heure précise du vote ne soit inscrite, rendant impossible toute corrélation entre les bulletins de vote et les informations contenues dans la base de données des électeurs
- D'autre part, un fichier sera créé, reprenant « en clair » le contenu du vote. Ce fichier sera envoyé sur le serveur dans le répertoire correspondant au bureau de vote. Le nom de ce fichier sera construit avec une fonction SHA-256, constitué sur base du Numéro de registre national de l'électeur, ainsi que de son mot de passe de vérification.

3 exemples de noms de fichiers :
- 732210b 19c899885355 7 e94a996790ffc38f3b851324e2405 b 7 e09 05c6e2cf10.txt
- 16c8fb 7 e6291d2d 1099527 4296 7394d284a65fb88a926212ce24b3 01382e9e4.txt
- ed2456914e48clel7b7bd922177291ef8b7f553edflblf66b6fcla 076524b22f.txt

### 3. Vérification

Une fois son vote validé, l'électeur - et lui seul - aura la possibilité de vérifier que son bulletin de vote aura été correctement entré dans le système. Pour ce faire, il se rendra sur le site de vérification, introduira éventuellement son bureau de vote, son numéro de registre national et son mot de passe de vérification.

### ===== Exemple ================================

Bureau de vote :Ixelles 23Numéro de Reg. Nat. :680814.478.96Mot de passe de vérification :Louxor76.78

### Envoyer

Ceci aura pour effet de lui afficher son bulletin de vote :

### ===== Exemple ====================================

- Liste X
- Candidat A
- Candidat B
- Candidat C

Afin de respecter toujours la confidentialité du vote, le hachage s'effectuera dans le logiciel « client » (le navigateur) de sorte que seul le résultat soit transmis au serveur de vérification, empêchant tout recoupement avec le profil de l'électeur.

### 4. Publication des résultats

Lors de la création du bulletin de vote, les résultats intermédiaires seront mis à jour en temps réel (ou en léger différé, toujours pour assurer la confidentialité du vote). Nous obtiendrons ainsi un dépouillement en temps réel. Libre aux administrateurs de l'élection de diffuser ces informations immédiatement, ou bien en différé - afin de se conformer aux dispositions légales en vigueur.

Un autre avantage de ce système de scrutin selon l'invention consiste en la possibilité d'envoyer, en temps réel ou en différé, une copie de tous les bulletins de vote vers les serveurs d'observateurs dument référencés. Ces observateurs pourraient être, par exemple :
- Des partis politiques, tant de la majorité que de l'opposition
- Des observateurs indépendants
- Des autorités gouvernementales
- Des médias

Ceux-ci auront ainsi tout loisir d'effectuer les comptages qu'ils désirent, validant pour leur propre compte les chiffres annoncés par le système de vote.

Le nombre de ces observateurs recevant une copie de l'ensemble des bulletins de vote sera limité par d'évidentes contraintes techniques. 1 million de votes représente 1 million de fichiers, d'une taille minimale sur disque dur de généralement de 4.096 octets, soit 4 Gigabytes d'informations. Cette taille restant malgré tout raisonnable, elle permettra l'envoi des bulletins de vote à suffisamment d'acteurs que pour assurer la pluralité des vérifications, et restaurer la confiance de tous dans l'intégrité du processus électoral.

Le transfert des bulletins de vote vers les serveurs des observateurs pourra être assuré via un VPN, ou de services Cloud tels que Dropbox, OneDrive ou Google Drive. Encore une fois, ces fichiers étant dépersonnalisés, ils ne posent pas de problème de sécurité.

### 5. Résistance à la coercition / à l'achat de vote

Le système permet également à l'électeur de qualifier son propre vote de « faux vote », et d'en émettre un second, valable, celui-ci. Cela aura pour effet de garder ce faux vote disponible dans le système, permettant à l'électeur de montrer ce « faux vote » à son oppresseur ou à la personne qui lui achète son vote, sans que celui-ci n'ait la moindre possibilité de le distinguer d'un vote véritable. Cependant, ce « faux vote » ne sera pas pris en considération au moment du dépouillement. Seul le vote entré comme véritable sera comptabilisé. L'achat de vote ou la coercition devient donc inutile.

Le système selon l'invention réunit donc bien, pour la première fois, les critères essentiels du vote démocratique, à savoir :
- Le secret absolu du vote
- La possibilité pour le votant et lui seul de vérifier son vote
- La possibilité pour « tous » de vérifier l'ensemble de bulletins de vote, et de procéder à tout recomptage souhaité
- La résistance à la coercition et à l'achat de vote

Un grand avantage du présent système est sa simplicité. L'électeur se connecte au site de vote directement depuis son navigateur internet via une connexion sécurisée (SSL, comme pour les systèmes bancaires), mais sans programme à installer, code java, calculette, infrastructure clef publique / clef privée ou autres certificats de sécurité. L'invention sera davantage comprise à l'examen des diagrammes de blocs annexé.

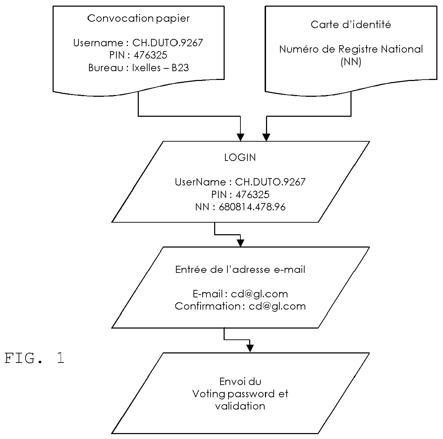

- La Fig. 1 illustre un exemple de processus d'inscription.

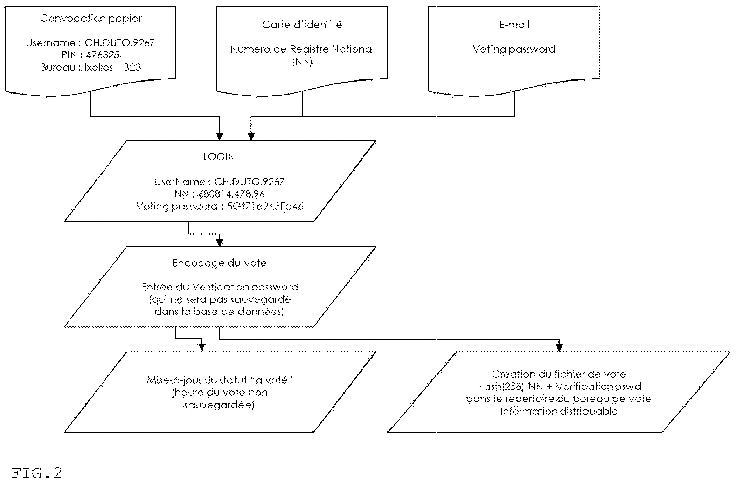

- La Fig. 2 illustre un exemple du processus de vote.

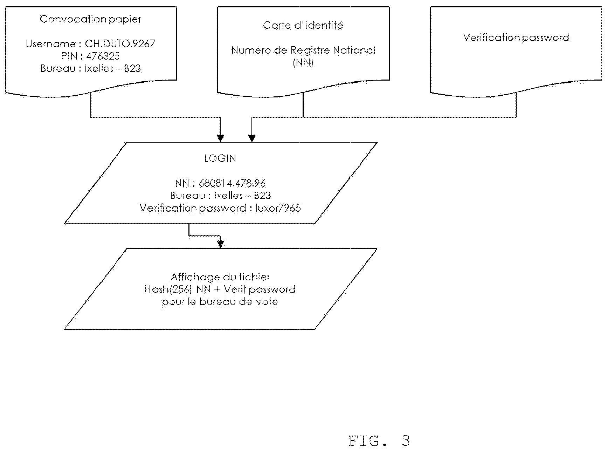

- La Fig. 3 illustre un exemple du processus de vérification selon l'invention.

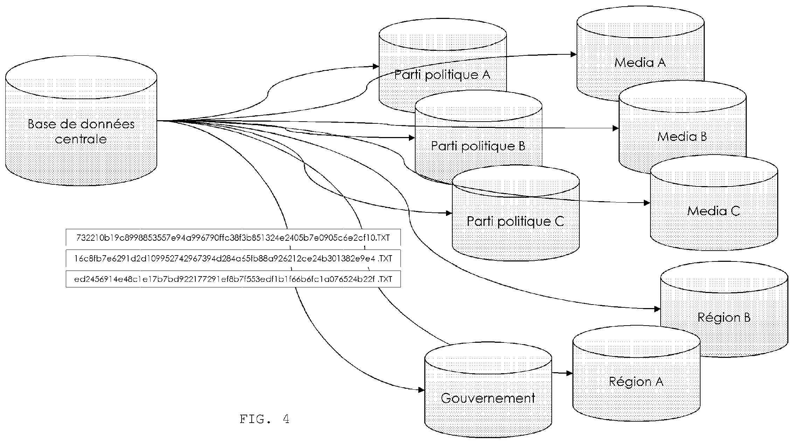

- La Fig. 4 illustre un exemple de publication des résultats.

Notons enfin concernant l'exemple illustré que le même système peut être utilisé dans l'isoloir, pour peu que celui-ci soit équipé d'un ordinateur avec une connexion à internet, ainsi que d'un navigateur internet.

En résumé l'invention concerne un système de vote par internet comprenant un mot de passe de vote à utiliser par l'utilisateur pour accéder au dit moyen de vote dans lequel un mot de passe de vérification demandé par le système est introduit par l'utilisateur. Ledit mot de passe de vérification, joint à un paramètre non confidentiel propre à l'électeur (par exemple numéro de registre national), sert à créer un nom de fichier construit avec une fonction cryptographique par exemple du type SHA-256 ou une fonction de hachage analogue, ledit fichier reprenant en clair (non crypté) le contenu du vote et étant accessible par l'utilisateur sur un site de vérification en introduisant ledit paramètre non confidentiel et son mot de passe de vérification.

On comprendra par ailleurs que le vote peut concerner un scrutin électoral (fédéral, européen, national, régional, municipal, communal, ...), l'élection de dirigeants d'associations, de groupements, de sociétés, de syndicats, de clubs, le vote pour des candidats à des concours (personnes, produits, services, ...), le vote pour l'expression d'opinions politiques ou sociétales (votations, consultations, RIC, référendum, ...)

On comprendra aussi que l'encodage du nom de fichier peut se faire, non pas sur base d'un paramètre non-confidentiel et un mot de passe de vérification, mais bien sur deux paramètres confidentiels - par exemple deux mots de passe, ou encore un seul mot de passe - mais dont on devra, dans ce cas, s'assurer de l'unicité.

Ex : Numéro de Reg. Nat. :680814.478.96Mot de passe :Louxor76.78Le hachage de ces deux paramètres est forcément unique, puisque le numéro de registre national est unique. En revanche, si l'on permet à l'électeur de ne travailler qu'avec un seul mot de passe (ex : blanche-neige-et-les-7-nains-1938), on devra s'assurer que le hachage produit est bien unique, au cas où quelqu'un d'autre aurait déjà utilisé le même mot de passe.

L'intérêt de cette disposition étant un éventuel surcroît de confiance dans le système puisqu'aucun paramètre permettant d'identifier l'utilisateur n'est donné. Dans le système de base, on s'engage à ce que ces données ne soient pas conservées, ni au moment du vote, ni lors d'une vérification, mais encore faut-il que l'utilisateur ait confiance dans le respect de cette disposition. Ici, plus rien ne lie objectivement l'électeur à ses paramètres, surtout pour la vérification.

## Revendications

1. Système de vote via un système de serveur informatique connecté à internet , le système de serveur informatique étant configuré pour mettre en oeuvre simultanément deux opérations suite au vote d'un électeur:
a. d'une part, la mise à jour d'une base de données des électeurs, en faisant passer le statut de l'électeur de « en attente de vote » à « a voté », sans conserver de trace du moment du vote afin qu'on ne puisse pas corréler le vote et les informations contenues dans la base de données des électeurs, et
b. d'autre part, la création d'un fichier stocké dans un répertoire sur le serveur, contenant, en clair, le contenu du vote, le nom de ce fichier étant constitué d'un hachage cryptographique d'un paramètre propre à l'électeur, et d'un mot de passe de vérification entré par l'électeur et non mémorisé par le système,
de telle sorte que l'électeur est enregistré comme ayant voté, et le contenu de son vote est totalement détaché du profil de l'électeur, et qu'il n'est plus possible pour personne - sauf pour l'électeur lui-même - de faire le lien entre les deux.

2. Système selon la revendication 1 dans lequel il y a plusieurs bureaux de vote et le système étant configuré pour que le fichier soit envoyé dans le répertoire correspondant au bureau de vote de l'électeur

3. Système selon n'importe laquelle des revendications précédentes étant configuré pour que les résultats intermédiaires du vote soient mis à jour en temps réel, permettant ainsi un dépouillement en temps réel.

4. Système selon l'une des revendications précédentes étant configuré pour qu'une copie de tous les fichiers comportant les votes en clair soit envoyée, en temps réel ou en différé, vers des serveurs d'observateurs dûment référencés.

5. Système selon l'une des revendications précédentes, configuré pour être utilisé dans un isoloir d'un bureau de vote.

6. Système selon l'une des revendications précédentes, le système étant de plus agencé pour permettre l'accès par l'électeur au contenu de son vote sur un site de vérification en introduisant ledit mot de passe de vérification, ou le nom haché du fichier afin d'éviter de devoir transmettre un paramètre pouvant permettre de l'identifier.

## Patentansprüche

1. Wahlsystem über ein an das Internet angeschlossenes IT-Serversystem, wobei das IT-Serversystem konfiguriert ist, um gleichzeitig zwei Operationen im Anschluss an die Wahl eines Wählers durchzuführen:
a. einerseits die Aktualisierung einer Datenbank der Wähler, indem der Status des Wählers von "Warte auf die Wahl" auf "hat gewählt" umgeschaltet wird, ohne eine Spur von dem Zeitpunkt der Wahl aufzubewahren, damit die Wahl und die in der Datenbank der Wähler enthaltenen Angaben nicht miteinander in Verbindung gebracht werden können, und
b. andererseits das Anlegen einer Datei, die in einem Verzeichnis auf dem Server gespeichert ist und im Klartext den Inhalt der Wahl enthält, wobei der Name dieser Datei aus einem kryptographischen Hashing eines dem Wähler eigenen Parameters und einem Überprüfungspasswort gebildet ist, das vom Wähler eingegeben und vom System nicht gespeichert wird,
derart, dass der Wähler als Wähler gespeichert ist, der gewählt hat, und der Inhalt seiner Wahl vollumfänglich vom Profil des Wählers getrennt ist und dass es für niemanden - außer dem Wähler selbst - mehr möglich ist, beide in Verbindung zu bringen.

2. System gemäß Anspruch 1, bei dem es mehrere Wahlbüros gibt und wobei das System konfiguriert ist, damit die Datei in das Verzeichnis geschickt wird, das dem Wahlbüro des Wählers entspricht.

3. System gemäß irgendeinem der vorherigen Ansprüche, das konfiguriert ist, damit die Zwischenergebnisse der Wahl in Echtzeit aktualisiert werden, was somit eine Auszählung in Echtzeit ermöglicht.

4. System gemäß einem der vorherigen Ansprüche, das konfiguriert ist, damit eine Kopie aller die Stimmen im Klartext umfassenden Dateien in Echtzeit oder zeitversetzt an ordnungsgemäß referenzierte Beobachtungsserver versandt wird.

5. System gemäß einem der vorherigen Ansprüche, das konfiguriert ist, um in einer Wahlkabine eines Wahlbüros verwendet zu sein.

6. System gemäß einem der vorherigen Ansprüche, wobei das System darüber hinaus angeordnet ist, um den Zugriff auf den Inhalt seiner Wahl auf einer Überprüfungssite durch den Wähler durch Eingeben des genannten Überprüfungspassworte oder des zerhackten Namens der Datei zu ermöglichen, um zu vermeiden, dass ein Parameter übertragen werden muss, der seine Identifizierung ermöglichen könnte.

## Claims

1. Voting system via a computer server system connected to the internet, with the computer server system being configured to simultaneously execute two operations following the voting by a voter:
a. on the one hand, the update of a voters' database, by changing the status of the voter from "vote pending" to "voted", without keeping a track of the time of the voting so that it is not possible to corelate the vote and the information contained in the voters' database, and
b. on the other hand, the creation of a file stored in a directory on the server, containing, in unencrypted form, the content of the vote, with the name of this file consisting of a cryptographic hashing of a parameter specific to the voter, and a verification password entered by the voter and not saved by the system,
such that
the voter is saved as having voted, and the content of their vote is totally detached from the voter profile, and that no one - except for the voter themself, can make a connection between the two.

2. System according to claim 1 in which there are several voting stations and the system being configured so that the file be sent to the directory corresponding to the voter's voting station.

3. System according to any of the previous claims being configured so that the intermediate results of the voting be updated, in real-time, thus enabling counting in real-time.

4. System according to one of the previous claims being configured so that a copy of all the files containing the votes, in unencrypted form, be sent, in real-time or non-real-time, to the duly referenced observer servers.

5. System according to one of the previous claims, configured to be used in a voting booth of a voting station.

6. System according to one of the previous claims, with the system also being arranged to allow the voter access to the content of their vote on a verification site by introducing the said verification password, or the hashed name of the file in order to avoid having to transmit a parameter that can allow identifying the same.
